# EUROPÄISCHE PATENTSCHRIFT

(11) **EP 0 595 768 B1**
(45) Veröffentlichungstag und Bekanntmachung des Hinweises auf die Patenterteilung: **21.01.1998**
(21) Anmeldenummer: 93810730.7
(22) Anmeldetag: 18.10.1993
(51) Int. Cl.: C09B 31/047

(54) **Azofarbstoffe, Verfahren zu deren Herstellung und deren Verwendung**
Azo dyestuffs, process for their preparation and the use thereof
Colorants azoiques, procédé pour leur préparation et leur utilisation

(30) Priorität: 26.10.1992 CH 3333/92
(43) Veröffentlichungstag der Anmeldung: 04.05.1994
(73) Patentinhaber: Ciba Specialty Chemicals Holding Inc., 4057 Basel (CH)
(72) Erfinder: Schaetzer, Jürgen, Dr., D-79618 Rheinfelden (DE); Posey, James C., Dr., CH-4053 Basel (CH)

(56) Entgegenhaltungen:
- DE-A- 1 923 680
- FR-A- 2 295 088
- FR-A- 2 382 484
- GB-A- 952 061

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel 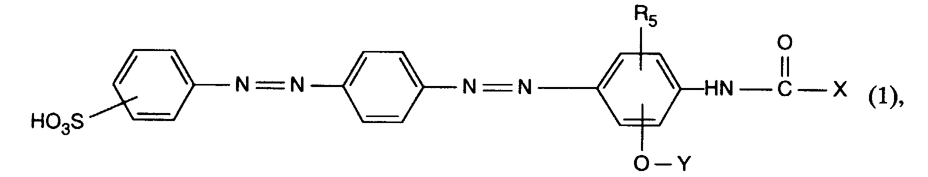 worin
R₅ C₁-C₄-Alkyl oder C₁-C₄-Alkoxy,
Y durch Hydroxy oder C₁-C₄-Alkoxy substituiertes C₁-C₈-Alkyl, und
X gegebenenfalls durch Hydroxy oder C₁-C₄-Alkoxy substituiertes C₁-C₈-Alkyl oder C₁-C₈-Alkoxy ist.

In der FR-A-2,382,484 werden Farbstoffe offenbart, die sich von den Farbstoffen der Formel (1) hinsichtlich des fehlenden Substituenten "-O-Y" unterscheiden.

In der FR-A-2,295,088 werden Farbstoffe offenbart, die sich von den Farbstoffen der Formel (1) hinsichtlich einer zusätzlichen Sulfogruppe an der mittleren Phenylenkomponente und einer Benzoylaminogruppe an der terminalen Phenylkomponente unterscheiden.

In der DE-A-1,923,680 werden Farbstoffe offenbart, die sich von den Farbstoffen der Formel (1) dadurch unterscheiden, dass die mittlere Phenylenkomponente eine Sulfogruppe und die terminale Phenylkomponente anstatt der Sulfogruppe eine Hydroxyoder eine Methoxygruppe gebunden hat.

In der GB-A-952,061 werden Farbstoffe offenbart, die sich von den Farbstoffen der Formel (1) hinsichtlich der Alkanoylaminogruppe an der terminalen Phenylkomponente und durch die Substituenten an der mittleren Phenylenkomponente unterscheiden.

Als C₁-C₄-Alkyl kommt für R₅ Methyl, Äthyl, Propyl, Isopropyl, Butyl, sek.-Butyl, tert.-Butyl oder Isobutyl, insbesondere Methyl, in Betracht.

Als C₁-C₄-Alkoxy kommt für R₅ z.B. Methoxy, Äthoxy, Propoxy, Isopropoxy, Butoxy oder Isobutoxy, insbesondere Methoxy, in Betracht.

Der Alkylteil C₁-C₈-Alkyl des Restes Y kann geradkettig oder verzweigt sein. Als Beispiele seien Methyl, Äthyl, Propyl, Isopropyl, Butyl, sek.-Butyl, tert.-Butyl, Isobutyl, sowie geradkettiges oder verzweigtes Pentyl, Hexyl, Heptyl oder Octyl genannt. Bevorzugt handelt es sich bei dem Alkylteil C₁-C₈-Alkyl des Restes Y um C₁-C₄-Alkyl. Die oben für Y genannten Alkylreste sind durch Hydroxy oder C₁-C₄-Alkoxy substituiert.

Der Rest X als C₁-C₈-Alkyl sowie der Alkylteil des Restes X als C₁-C₈-Alkoxy kann geradkettig oder verzweigt sein. Als Beispiele seien Methyl, Äthyl, Propyl, Isopropyl, Butyl, sek.-Butyl, tert.-Butyl, Isobutyl, sowie geradkettiges oder verzweigtes Pentyl, Hexyl, Heptyl oder Octyl genannt. Bevorzugt handelt es sich bei dem Rest X in der Bedeutung als C₁-C₈-Alkyl um C₁-C₄-Alkyl und in der Bedeutung als C₁-C₈-Alkoxy um C₁-C₄-Alkoxy. Die oben für X genannten Alkylreste sowie der Alkylteil der Alkoxyreste können unsubstituiert oder durch Hydroxy oder C₁-C₄-Alkoxy substituiert sein. Insbesondere ist X als Alkyl unsubstituiertes C₁-C₈-Alkyl, vorzugsweise C₁-C₄-Alkyl und bevorzugt Methyl oder Aethyl.

Bevorzugt ist R₅ C₁-C₄-Alkyl.

Ganz besonders bevorzugte Azofarbstoffe der Formel (1) sind solche, worin R₅ C₁-C₄-Alkyl und X C₁-C₄-Alkyl ist.

Gegenstand der Erfindung ist ferner ein Verfahren zur Herstellung der Azofarbstoffe der Formel (1), welches dadurch gekennzeichnet ist, dass man ein Amin der Formel 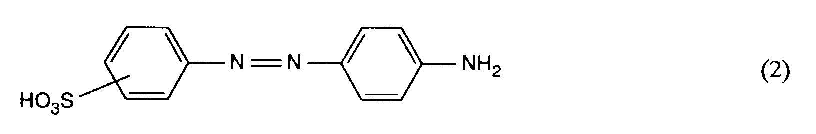 diazotiert, auf eine Kupplungskomponente der Formel 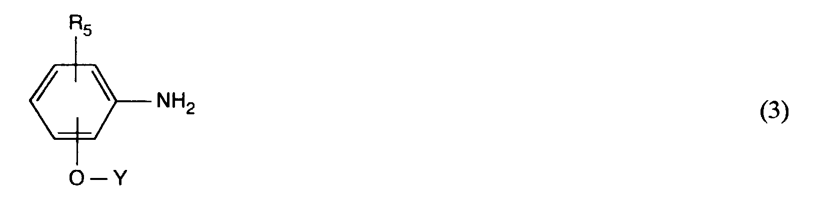 kuppelt, das erhaltene Reaktionsprodukt mit einer den Rest der Formel 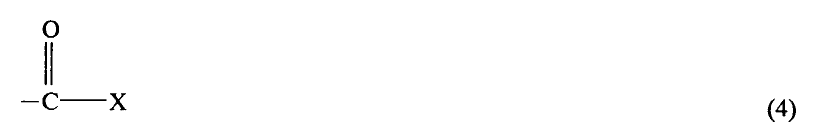 einführenden Verbindung umsetzt und gegebenenfalls eine weitere Umwandlungsreaktion anschliesst, wobei R₅, X und Y die oben unter Formel (1) angegebenen Bedeutungen haben.

Die Diazotierung der Verbindung der Formel (2) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei 10 bis 30°C.

Die Kupplung auf die Kupplungskomponente der Formel (3) erfolgt in an sich bekannter Weise, bei sauren, neutralen bis schwach alkalischen pH-Werten und Temperaturen von beispielsweise -5 bis 30°C, vorzugsweise 5 bis 15°C.

Zur Einführung des Restes der Formel (4) können beispielsweise Verbindungen der Formel 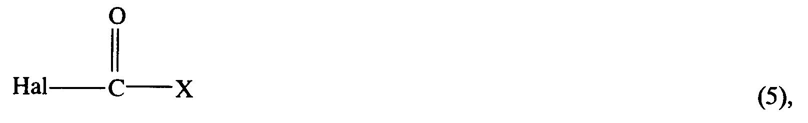 worin Hal Halogen, wie Chlor, Brom oder Jod, insbesondere Chlor, bedeutet, verwendet werden. Für die Einführung von Verbindungen der Formel (4), worin X Methyl bedeutet, kommt insbesondere Essigsäureanhydrid in Betracht. Für die Einführung von Verbindungen der Formel (4), worin X Aethyl bedeutet, kommt insbesondere Propionsäureanhydrid in Betracht.

Die Einführung des Restes der oben genannten Formel (4) kann z.B. in dipolaren aprotischen Lösungsmitteln, wie z.B. Dimethylformamid oder Dimethylsulfoxid, oder in Pyridin oder insbesondere in Wasser erfolgen, bei einer Temperatur von beispielsweise 40 bis 100°C und einem pH-Wert von z.B. 5 bis 8.

Zur Herstellung von Azofarbstoffen der Formel (1), welche einen durch Hydroxy substituierten Alkylrest enthalten, kann auch von entsprechenden Verbindungen ausgegangen werden, welche einen Acetatrest enthalten. Durch Hydrolyse des Acetatrestes, z.B. in einer Wasser/Methanol-Mischung in Gegenwart von Ammoniak, kann die entsprechende, eine Hydroxygruppe enthaltende Verbindung erhalten werden.

In dem erfindungsgemässen Verfahren zur Herstellung der Azofarbstoffe der Formel (1) gelten für die Substituenten der Verbindungen der Formeln (3), (4) und (5) die oben angegebenen Bevorzugungen.

Die Verbindungen der Formeln (2), (3) und (5) sind bekannt oder können in Analogie zu bekannten Verbindungen hergestellt werden.

Die Azofarbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide und insbesondere Wolle und synthetischen Polyamiden. Bevorzugt ist das Färben oder Bedrucken von natürlichen oder synthetischen Polyamidfasermaterialien. Die erfindungsgemässen Azofarbstoffe der Formel (1) können in allgemein üblicher, gegebenenfalls zuvor aufbereiteter Form zum Färben oder Bedrucken verwendet werden. Man erhält egale Färbungen in gelben bis orangen Tönen mit guten Allgemeinechtheiten, insbesondere guter Reib-, Nass-, Nassreib- und Lichtechtheit. Ferner sind die erfindungsgemässen Farbstoffe gut wasserlöslich. Weiterhin sind die erfindungsgemässen Farbstoffe sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1:

Eine neutrale, 70 bis 80°C heisse Lösung von 36,7 Teilen 4-Amino-azobenzol-4'-sulfonsäure in 500 Teilen Wasser lässt man gleichzeitig mit 27,5 Teilen einer wässrigen 4-normalen Natriumnitritlösung in eine Mischung aus 30 Teilen konzentrierter Salzsäure und 200 Teilen Eis einlaufen und hält die Temperatur der Reaktionsmischung durch Zugabe von Eis bei ca. 20°C. Nach beendeter Zugabe wird noch 2 Stunden nachgerührt und der Nitritüberschuss wird mit wenig Amidosulfonsäure zerstört. Das so bereitete Diazotierungsgemisch lässt man langsam in eine 0 bis 5°C kalte Lösung von 17,5 Teilen 2-(2-Amino-4-methylphenoxy)äthanol in 200 Teilen 2-normaler Salzsäure einfliessen und hält dabei mit wässriger Natriumcarbonatlösung (20%) den pH bei einem Wert von ca. 5. Die dunkle, braunrote Suspension wird noch eine Stunde bei einer Temperatur von 10 bis 15°C gerührt. Der Niederschlag wird abgesaugt, in 500 Teilen Wasser bei einer Temperatur von 80°C gelöst und mit 30 Teilen Natriumchlorid ausgesalzen. Nach Waschen mit wenig 5%-iger wässriger Natriumchloridlösung und Äthanol erhält man 42,3 Teile eines roten Pulvers.

3 Teile des so erhältlichen Bisazofarbstoffes werden in 30 Teile Wasser suspendiert und anschliessend auf eine Temperatur von 80°C erwärmt. Die resultierende dunkelrote Lösung wird tropfenweise mit 8,3 Teilen Propionsäureanhydrid versetzt. Der pH wird gleichzeitig mit einer wässrigen 4-normalen Natriumhydroxidlösung bei einem Wert von 6,8 bis 7,5 gehalten. Nach insgesamt ca. 10 Stunden bei einer Temperatur von 70 bis 90°C sind nur noch Spuren des Eduktes mittels Dünnschichtchromatographie nachweisbar. Die Reaktionsmischung wird anschliessend auf Raumtemperatur abgekühlt, die wässrige Mutterlauge abdekantiert und der wachsartige Rückstand mit wenig Isopropanol versetzt. Nun wird die isopropanolische Lösung stark eingeengt, auf eine Temperatur von 0°C abgekühlt und der resultierende Niederschlag wird abfiltriert. Man erhält 4,4 Teile eines orangefarbenen Farbstoffes, welcher in Form der freien Säure der Verbindung der Formel 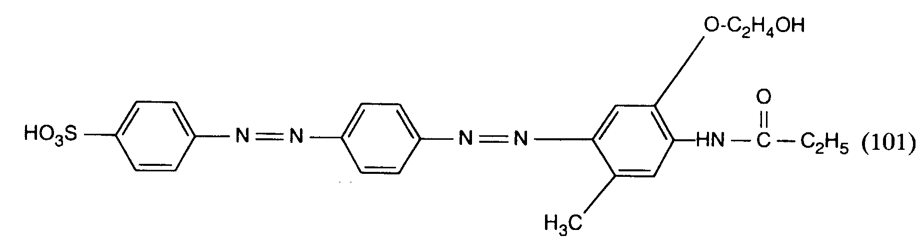 entspricht. Der erhaltene Farbstoff der Formel (101) färbt natürliches und synthetisches Polyamidfasermaterial in orangen Farbtönen.

### Beispiele 2 bis 24:

Analog zu den Angaben in Beispiel 1 können die in Form der freien Säure angegebenen Farbstoffe der Formel 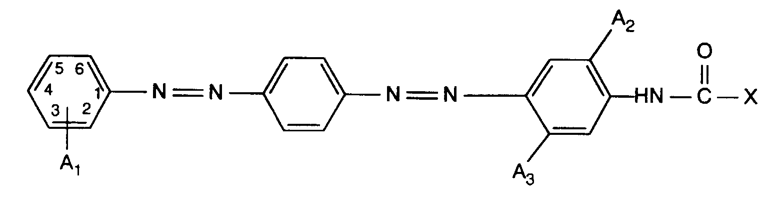 erhalten werden, worin A₁, A₂, A₃ und X die in der folgenden Tabelle 1 angegebenen Bedeutungen haben. Zur Einführung des Restes -CO-X, worin X Methyl ist, werden äquimolare Mengen Essigsäureanhydrid verwendet. Die in Tabelle 1 angegebenen Farbstoffe färben natürliches und synthetisches Polyamidfasermaterial in gelben bis orangen Farbtönen.

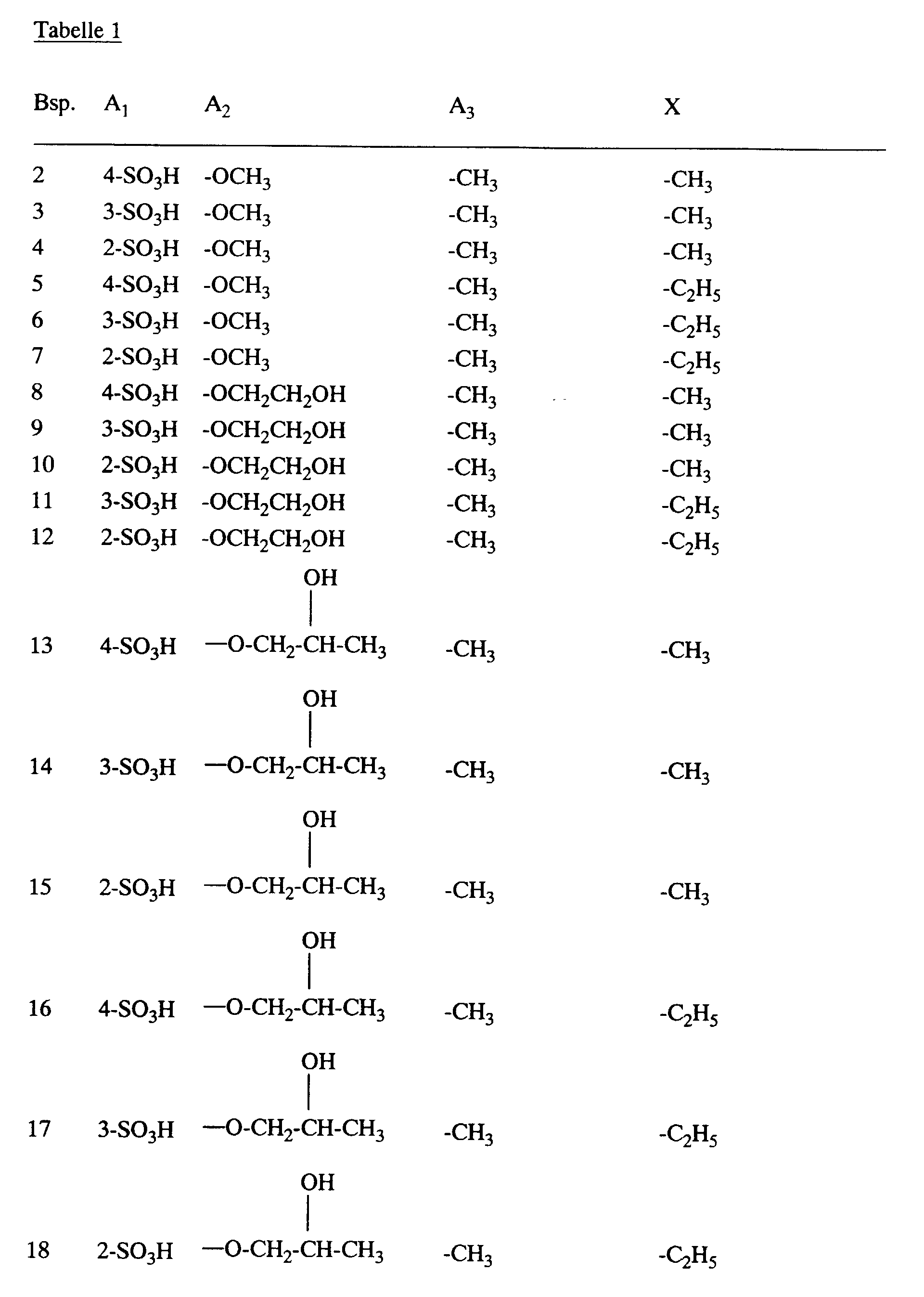

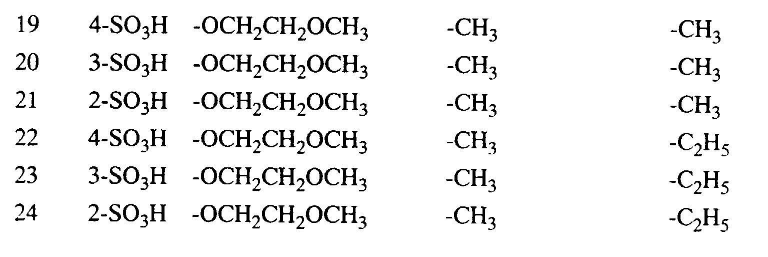

### Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 1 beträgt 0,7 % bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein orange gefärbtes Polyamid-6,6-Gewebe, das eine reine Nuance und gute Gesamtechtheiten aufweist.

### Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 1 beträgt 1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein orange gefärbtes Polyamid-6,6-Gewebe, das eine reine Nuance und gute Gesamtechtheiten aufweist.

### Färbevorschrift III

Man färbt 10 Teile Wollstück in 500 Teilen einer wässrigen Flotte. Bezogen auf das Fasergewicht betragen die Anteile an Farbstoff 0,45 % gemäss Beispiel 1, an Glaubersalz kalz. 5 % und 80%-iger Essigsäure 2 %. Die Färbedauer bei einer Temperatur von 98° beträgt 30-60 Minuten. Das orange gefärbte, wie üblich gewaschene und getrocknete Wollstück weist sehr gute Allgemeinechtheiten auf.

### Druckbeispiel (Stoffdruck)

Gewebtes Polyamid 6 oder Polyamid 6.6-Material wird auf einer herkömmlichen Textildruckmaschine mit einer Paste bedruckt, die bezogen auf 1000 g Druckpaste enthält:
a) 20 g des Farbstoffes gemäss Beispiel 1,
b) 50 g Harnstoff,
c) 50 g Thiodiäthylenglykol,
d) 320 g Wasser,
e) 500 g Kernmehl- oder Guarmehlderivat, 10%-ig und
f) 60 g Ammontartrat-Lösung 15 Bè.

Die bedruckte Ware wird im Trockenschrank bei 70 bis 80° getrocknet und dann 20 bis 30 Minuten mit Sattdampf von 101 bis 103° gedämpft. Anschliessend wird die Ware 10 Minuten kalt gespült, 15 Minuten bei 50 bis 60° mit 2 g/l eines synthetischen Waschmittels gewaschen, erneut kalt gespült und dann getrocknet. Man erhält einen gleichmässigen Druck in oranger Nuance.

## Patentansprüche

1. Azofarbstoffe der Formel 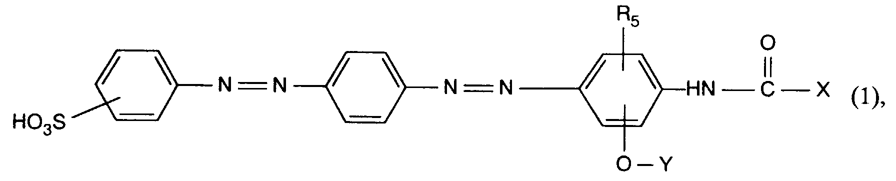 worin
R₅ C₁-C₄-Alkyl, oder C₁-C₄-Alkyl,
Y durch Hydroxy oder C₁-C₄-Alkoxy substituiertes C₁-C₈-Alkyl, und
X gegebenenfalls durch Hydroxy oder C₁-C₄-Alkoxy substituiertes C₁-C₈-Alkyl oder C₁-C₈-Alkoxy, ist.

2. Azofarbstoffe gemäss Anspruch 1, dadurch gekennzeichnet, dass R₅ C₁-C₄-Alkyl ist.

3. Verfahren zur Herstellung von Azofarbstoffen gemäss Anspruch 1, dadurch gekennzeichnet, dass man ein Amin der Formel 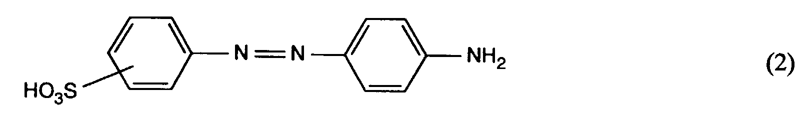 diazotiert, auf eine Kupplungskomponente der Formel 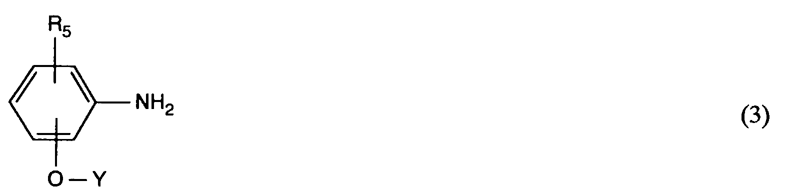 kuppelt, das erhaltene Reaktionsprodukt mit einer den Rest der Formel 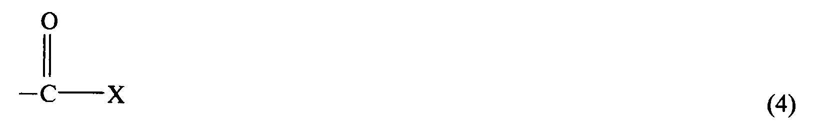 einführenden Verbindung umsetzt und gegebenenfalls eine weitere Umwandlungsreaktion anschliesst, wobei R₅, X und Y die in Anspruch 1 angegebenen Bedeutungen haben.

4. Verwendung der Azofarbstoffe gemäss den Ansprüchen 1 und 2 bzw. der gemäss Anspruch 3 erhaltenen Azofarbstoffe zum Färben oder Bedrucken von stickstoffhaltigen oder hydroxygruppenhaltigen Fasermaterialien.

5. Verwendung gemäss Anspruch 4 zum Färben oder Bedrucken von natürlichen oder synthetischen Polyamidfasermaterialien.

## Claims

1. An azo dye of formula 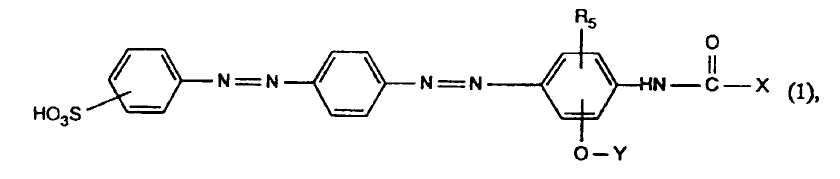 wherein
R₅ is C₁-C₄alkyl or C₁-C₄alkoxy, Y is hydroxyl- or C₁-C₄alkoxy-substituted C₁-C₈alkyl, and
X is C₁-C₈alkyl or C₁-C₈alkoxy, each unsubstituted or substituted by hydroxyl or by C₁-C₄alkoxy.

2. An azo dye according to claim 1, wherein R₅ is C₁-C₄alkyl.

3. A process for the preparation of an azo dye according to claim 1, which comprises diazotising an amine of formula 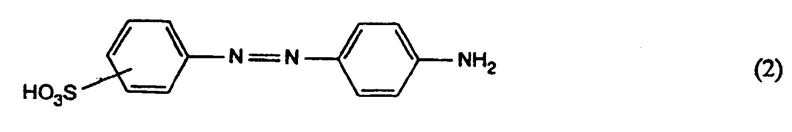 coupling the diazotised amine to a coupling component of formula 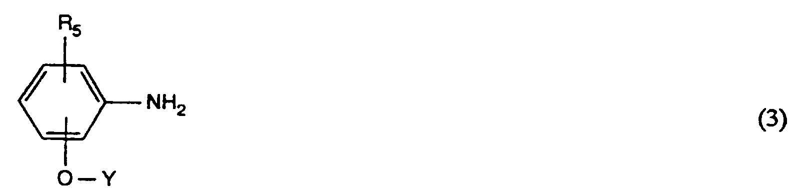 reacting the reaction product with a compound that introduces the radical of formula 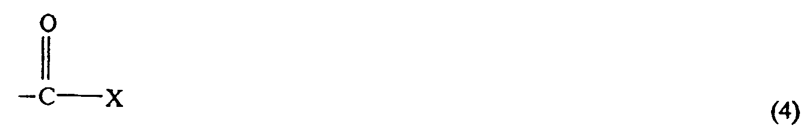 and, if desired, carrying out an additional conversion reaction, where R₅, X and Y are as defined in claim 1.

4. Use of an azo dye according to claims 1 and 2 or obtained according to claim 3 for dyeing or printing nitrogen-containing or hydroxyl-containing fibre materials.

5. Use according to claim 4 for dyeing or printing natural or synthetic polyamide fibre materials.

## Revendications

1. Colorants azoïques de formule 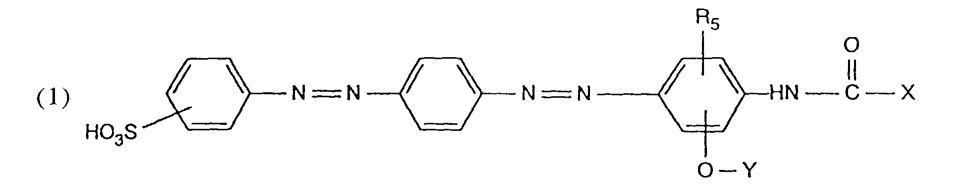 dans laquelle
R₅ représente un groupe alkyle en C₁₋₄ ou alcoxy en C₁₋₄,
Y représente un groupe alkyle en C₁₋₈ portant un substituant hydroxy ou alcoxy en C₁₋₄, et
X représente un groupe alkyle en C₁₋₈ ou alcoxy en C₁₋₈ éventuellement substitués par un ou plusieurs groupes hydroxy ou alcoxy en C₁₋₄.

2. Colorants azoïques conformes à la revendication 1, caractérisés en ce que R₅ représente un groupe alkyle en C₁₋₄.

3. Procédé de préparation de colorants azoïques conformes à la revendication 1, caractérisé en ce qu'une amine de formule 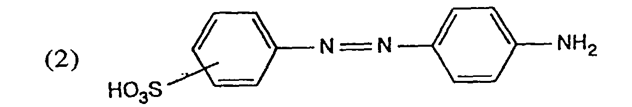 est diazotée, en ce qu'elle est copulée avec un copulant de formule 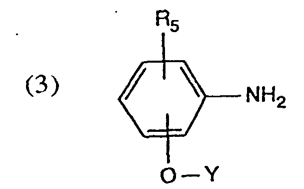 en ce que l'on fait réagir le produit réactionnel avec un composé introduisant un résidu de formule 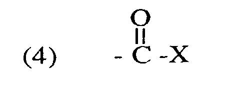 et en ce que l'on fait suivre éventuellement une réaction de conversion supplémentaire, R₅, X et Y ayant la signification indiquée dans la revendication (1).

4. Utilisation des colorants azoïques conformes aux revendications 1 et 2 ou des colorants obtenus conformément à la revendication 3 pour la teinture ou l'impression de matériaux fibreux contenant des atomes d'azote ou des groupes hydroxyle.

5. Utilisation conforme à la revendication 4 pour la teinture ou l'impression de matériaux fibreux en polyamide synthétique ou naturel.
